# EUROPEAN PATENT SPECIFICATION

(11) **EP 0 514 696 B1**
(45) Date of publication and mention of the grant of the patent: **01.04.1998**
(21) Application number: 92107335.9
(22) Date of filing: 29.04.1992
(51) Int. Cl.: B23K 11/31

(54) **Welding gun for an automatic spot welding system**
Widerstandspunktschweisspistole für eine automatische Schweissmaschine
Pistolet à souder par points pour machine à souder automatique

(30) Priority: 03.05.1991 IT TO910331
(43) Date of publication of application: 25.11.1992
(73) Proprietor: FIAT AUTO S.p.A., 10135 Torino (IT)
(72) Inventor: Guglielmin, Carlo, I-10095 Grugliasco (IT)
(74) Representative: Jorio, Paolo, Dr. Ing.

(56) References cited:
- GB-A- 2 221 416
- PATENT ABSTRACTS OF JAPAN vol. 6, no. 193 (M-160)(1071) 2 October 1982 &
- PATENT ABSTRACTS OF JAPAN vol. 6, no. 236 (M-173)(1114) 25 November 1982 &

## Description

The present invention relates to a welding gun for an automatic spot welding system.

Welding guns of the aforementioned type normally comprise a top and bottom electrode movable between an idle and work position contacting the work; and a frame fitted with articulated electrode supports connected to the frame via a lever and cam mechanism featuring at least one actuating cylinder connected to the levers and the frame.

Normally, the top electrode moves between the idle and work position along a straight path, and the bottom electrode along a path comprising at least two straight portions at a given angle to each other, and which is determined by a cam cooperating with a pin integral with one of the levers. The mechanism also comprises a spring cooperating with the cam and pin, for controlling travel of the bottom electrode between the work and idle position.

Welding guns of the aforementioned type present several drawbacks.

In particular, after a long period of operation, return travel of the bottom electrode from the work to the idle position after welding may be impeded or delayed due to a reduction in the force exerted by the spring, which invariably tends to slacken in time, thus seriously affecting the operating performance of the gun.

Secondly, a good deal of friction is encountered between the cam and pin, due to inclusions, particularly slag, penetrating between the mating surfaces of the two parts, and which may even result in jamming of the gun.

Thirdly, the traveling direction of the bottom electrode towards the end of the work stroke is poorly suited for supporting the work, due to the fairly wide angle formed with the edges for welding.

Lastly, the speed of the bottom electrode, again towards the end of the work stroke, is too high, thus resulting in crashing and, consequently, shifting of the work.

It is an object of the present invention to provide a welding gun of the aforementioned type designed to overcome the aforementioned drawbacks.

According to the present invention, there is provided a welding gun comprising a top and bottom electrode movable between an idle and a work position contacting the work; characterized by the fact that said top electrode is connected to a first rocker arm of an articulated quadrilateral, so as to travel along a first arc; and said bottom electrode is connected to a second rocker arm of said articulated quadrilateral, so as to travel along a second arc; each said rocker arm having one end connected by a hinge to the frame of said gun, and being connected by a hinge to a connecting rod between said rocker arms; actuating means being provided for so controlling one of said rocker arms as to move said electrodes from said first to said second position; said second position being so selected as to be located substantially at the point of intersection of said first and second arcs.

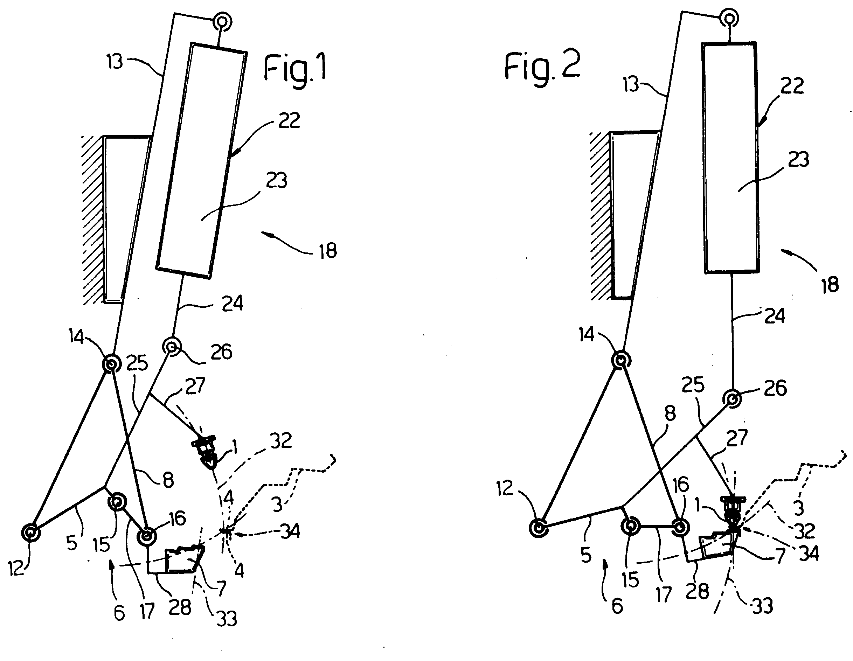

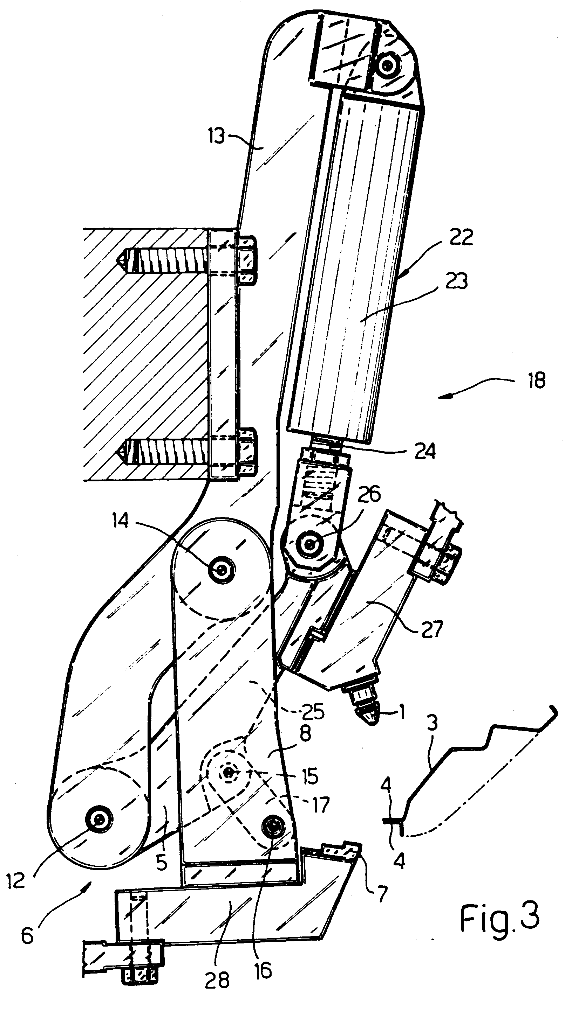

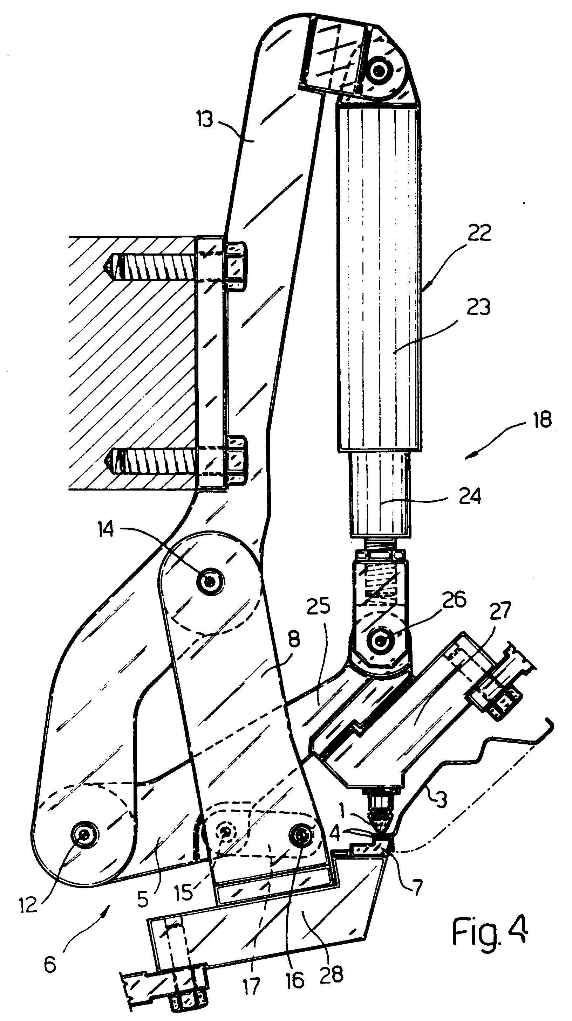

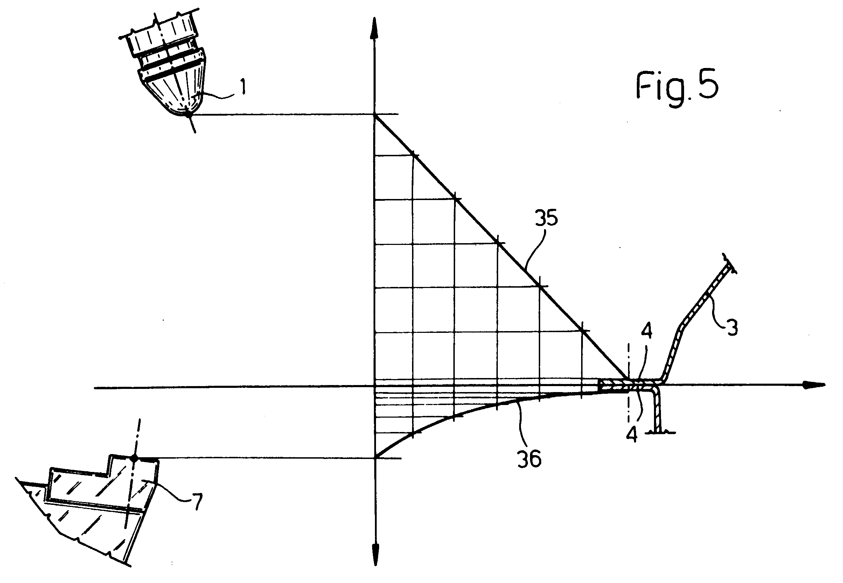

The gun according to the present invention will be described by way of example with reference to the accompanying drawings, in which:
Fig.s 1 and 2 show schematic views of the main components of the gun according to the present invention in the idle and work positions respectively;
Fig.s 3 and 4 show respective side views of the gun according to the present invention in the Fig.1 and 2 positions;
Fig.5 shows a speed diagram of the top and bottom electrodes towards the end of the work stroke.

As shown in Fig.s 1 and 2, the gun according to the present invention substantially comprises a top electrode 1 and a bottom electrode 7, movable between a first idle position (Fig.1) and a second work position (Fig.2) contacting semifinished workpieces 3 normally consisting of two metal sheets having substantially flat, parallel, contacting edges 4 for spot welding.

According to the present invention, top and bottom electrodes 1 and 7 are connected respectively to first and second rocker arms 5 and 8 forming part of an articulated quadrilateral 6. Rocker arms 5 and 8 present one end connected by respective hinges 12 and 14 to frame 13 of quadrilateral 6, the other ends being connected by respective hinges 15 and 16 to a connecting rod 17 between rocker arms 5 and 8.

Actuating means 18 are provided for so controlling one of rocker arms 5, 8 as to move electrodes 1 and 2 from the Fig.1 idle position to the Fig.2 work position.

Said actuating means conveniently comprise a fluid, e.g. hydraulic, cylinder 22 having a casing 23, and a rod 24 powered by a piston sliding inside casing 23. Casing 23 is hinged to frame 13, and rod 24 to an arm 25, integral with rocker arm 5, by means of a hinge 26.

Top electrode 1 is connected to arm 25 by an appendix 27 on the latter.

Bottom electrode 7 is connected to rocker arm 8 by an arm 28 integral with arm 8.

Top electrode 1 thus travels along an arc 32, the center of which corresponds with the center of hinge 12; while bottom electrode 7 travels along a further arc 33, the center of which corresponds with the axis of hinge 14. The location of edges 4 of sheets 3 is so selected as to substantially correspond with the intersection of arcs 32 and 33, as indicated by 34 in Fig.s 1 and 2.

Point 34 and rotation axes 12 and 14 of rocker arms 5 and 8 are so selected that top electrode 1 reaches point 34 along arc 32 at substantially vertical speed, and that the angle formed by arcs 32 and 33 at point 34 is greater than 90°. Thus, bottom electrode 7 reaches point 34 at a speed having a vertical component in the opposite direction to that of electrode 1 at the same point, and is thus positioned correctly beneath edges 4 for supporting them and effectively withstanding the pressure exerted by top electrode 1.

Moreover, arc 33 of bottom electrode 7 conveniently lies substantially below the horizontal plane through point 34, which plane also conveniently includes the center of hinge 12, as shown in Fig.s 1 and 2.

It has been found that, by appropriately selecting the distance between electrode 1 and the axis of rotation 12 of rocker arm 5, the distance between electrode 7 and the axis of rotation 14 of rocker arm 8, the distance between axes 12 and 14 (length of frame 13), and the length of connecting rod 17 (defined by the distance between the axes of hinges 15 and 16), it is possible to achieve, over the final portion of arcs 32 and 33 towards point 34, electrode speeds enabling particularly good welding. Conveniently, the distance between electrode 1 and axis 12 is substantially the same as that between electrode 7 and axis 14, and the same as or slightly greater than the distance between axes 12 and 14.

Conveniently, the distance between the axes of hinges 15 and 16 (defining the length of connecting rod 17) is over a third and less than a fifth of the distance between electrode 1 and the axis of hinge 12 (or between electrode 7 and the axis of hinge 14).

With the above geometry, the vertical speed components of electrodes 1 and 7 over the final portion of arcs 32 and 33 are as shown respectively by 35 and 36 in the Fig.5 diagram, wherein electrode 1 presents a substantially constant vertical speed component, as compared with that of electrode 7, which decreases gradually to substantially zero by the time the electrode reaches the work position (point 34).

The gun shown schematically in Fig.s 1 and 2 may be produced as shown in Fig.s 3 and 4, the component parts of which are indicated using the same numbering system, and the geometry of which in relation to the schematic views in Fig.s 1 and 2 will be clear to those skilled in the art.

The gun according to the present invention operates as follows.

In the idle position shown in Fig.s 1 and 3, the components of articulated quadrilateral 6 are positioned as shown, i.e. with the piston of cylinder 22 in the top limit position; and, consequently, rocker arms 5 and 8 so arranged as to position electrodes 1 and 7 at predetermined points on arcs 32 and 33, a given distance from work location 34.

Once the work is positioned at point 34, cylinder 22 is activated so as to lower rod 24 and, via arm 25, rotate rocker arm 5, which in turn, via connecting rod 17, rotates rocker arm 8, so as to move both electrodes into the work position (Fig.2) at point 34 at the intersection of respective arcs 32 and 33, where edges 4 of the work are welded. As already stated and shown in Fig.5, over the final portion of arcs 32 and 33, electrode 1 approaches edges 4 with a substantially constant vertical speed component, while that of electrode 7 decreases gradually to zero on reaching point 34. Consequently, electrode 7 eases smoothly beneath edges 4 in such a manner as to effectively support the same.

A substantially constant vertical speed component of electrode 1 is particularly favourable for maintaining constant operating conditions even in the event of severe wear of the electrode, in which case, for the electrode to be moved into the work position, rocker arm 5 must be rotated further than it would be in the absence of wear. Even in the presence of severe wear, however, the vertical speed component of the electrode remains substantially the same as that of a new electrode.

Positive control by rocker arms 5 and 8 provides for extremely rapid detachment of both the top and bottom electrodes. Moreover, the gun as a whole provides for a high degree of reliability, due to the electrode control mechanism (articulated quadrilateral 6) involving very little friction or gripping which might result in jamming of the gun.

To those skilled in the art it will be clear that changes may be made to the gun as described and illustrated herein.

## Claims

1. A welding gun comprising a top and bottom electrode (1, 7) movable between an idle and a work position contacting the work (3); characterized by the fact that said top electrode (1) is connected to a first rocker arm (5) of an articulated quadrilateral (6), so as to travel along a first arc (32); and said bottom electrode (7) is connected to a second rocker arm (8) of said articulated quadrilateral (6), so as to travel along a second arc (33); each said rocker (5, 8) arm having one end connected by a hinge (12, 14) to the frame (13) of said gun, and being connected by a hinge (15, 16) to a connecting rod (17) between said rocker arms (5, 8); actuating means (18) being provided for so controlling one of said rocker arms (5, 8) as to move said electrodes (1, 7) from said first to said second position; said second position being so selected as to be located substantially at the point of intersection (34) of said first and second arcs (32, 33).

2. A welding gun as claimed in Claim 1, characterized by the fact that said actuating means (18) comprise a fluid cylinder (22) having a casing (23) and a rod (24) activated by a piston sliding inside said casing (23); said casing (23) and said rod (24) being hinged respectively to said frame (13) and to an arm (25) integral with said first rocker arm (5).

3. A welding gun as claimed in Claim 1 or 2, characterized by the fact that said top electrode (1) is connected to said arm (25) integral with said first rocker arm (5).

4. A welding gun as claimed in one of the foregoing Claims, characterized by the fact that said bottom electrode (7) is connected to an arm (28) integral with said second rocker arm (8).

5. A welding gun as claimed in one of the foregoing Claims, characterized by the fact that the axes of said hinges (12, 14) connecting said rocker arms (5, 8) to said frame (13) are so located that, at said point of intersection (34), the tangents to said arcs (32, 33) form an angle of over 90°, and said bottom electrode (7) presents a speed component in the opposite direction to that of said top electrode (1).

6. A welding gun as claimed in Claim 1, characterized by the fact that said axes of said hinges (12, 14) connecting said rocker arms (5, 8) to said frame (13) are so located that, at said point of intersection (34), said top electrode (1) presents a substantially vertical speed, and the path of said bottom electrode (7) lies substantially below a horizontal plane through said point of intersection (34).

7. A welding gun as claimed in one of the foregoing Claims, characterized by the fact that the position of said hinges (12, 14) connecting said rocker arms (5, 8) to said frame (13), the distance between said top and bottom electrodes (1, 7) and said axes of said hinges (12, 14) respectively connecting said first and second rocker arms (5, 8), and the length of said connecting rod (17) are so selected that, over the final portions of said first and second arcs (32, 33) prior to said point of intersection (34), the vertical speed component of said top electrode (1) is substantially constant, and the vertical speed component of said bottom electrode (7) decreases gradually to substantially zero by the time said bottom electrode (7) reaches said work position.

8. A welding gun as claimed in Claim 7, characterized by the fact that said distance between said top electrode (1) and said hinge (12) connecting said first rocker arm (5) is substantially equal to the distance between said bottom electrode (7) and said hinge (14) connecting said second rocker arm (8), and substantially equal to the distance between said hinges (12, 14); the length of said connecting rod (17) being over 1/3 and less than 1/5 of said distance between said electrodes (1, 7) and said hinges (12, 14).

9. A welding gun as claimed in one of the foregoing Claims, characterized by the fact that said frame (13) of said gun comprises a substantially vertical arm to the end of which is hinged said casing (23) of said fluid cylinder (22).

## Patentansprüche

1. Schweißpistole, enthaltend eine obere und eine untere Elektrode (1, 7), welche zwischen einer Leerlauf- und einer Arbeitsstellung, bei der das Werkstück (3) kontaktiert wird, bewegbar sind; dadurch gekennzeichnet, daß die obere Elektrode (1) mit einem ersten Schwinghebel (5) eines gelenkigen Vierecks (6) verbunden ist, so daß sie sich entlang eines ersten Bogens (32) hin und her bewegt; und die untere Elektrode (7) mit einem zweiten Schwinghebel (8) des gelenkigen Vierecks (6) verbunden ist, so daß sie sich entlang eines zweiten Bogens (33) hin und her bewegt; wobei jeder Schwinghebel (5, 8) an einem Ende durch ein Scharnier (12, 14) mit dem Rahmen (13) der Pistole und durch ein Scharnier (15, 16) mit einer Verbindungsstange (17) zwischen den Schwinghebeln (5, 8) verbunden ist; wobei ein Antriebsmittel (18) zur Steuerung eines der Schwinghebel (5, 8) vorliegt, um die Elektroden (1, 7) von der ersten zu der zweiten Stellung zu bewegen; wobei die zweite Stellung derart ausgewählt ist, daß sie sich im wesentlichen an dem Schnittpunkt (34) des ersten und zweiten Bogens (32, 33) befindet.

2. Schweißpistole gemäß Anspruch 1, dadurch gekennzeichnet, daß das Antriebsmittel (18) einen Fluidzylinder (22) mit einem Gehäuse (23) und einer Stange (24) umfaßt, der durch einen Kolben, welcher im Innern des Gehäuses (23) gleitet, aktiviert wird; wobei das Gehäuse (23) und die Stange (24) mit dem Rahmen (13) beziehungsweise einem Hebel (25), der mit dem ersten Schwinghebel (5) integral ausgebildet ist, gelenkig verbunden sind.

3. Schweißpistole gemäß Anspruch 1 oder 2, dadurch gekennzeichnet, daß die obere Elektrode (1) mit dem Hebel (25), der mit dem ersten Schwinghebel (5) integral ausgebildet ist, verbunden ist.

4. Schweißpistole nach einem der vorhergehenden Ansprüche, dadurch gekennzeichnet, daß die untere Elektrode (7) mit einem Hebel (28), der mit dem zweiten Schwinghebel (8) integral ausgebildet ist, verbunden ist.

5. Schweißpistole nach einem der vorhergehenden Ansprüche, dadurch gekennzeichnet, daß die Achsen der Scharniere (12, 14), die die Schwinghebel (5, 8) mit dem Rahmen (13) verbinden, derart angeordnet sind, daß an dem Schnittpunkt (34) die Tangenten zu den Bögen (32, 33) einen Winkel von über 90° bilden, und daß die untere Elektrode (7) eine Geschwindigkeitskomponente in der entgegengesetzten Richtung zu der der oberen Elektrode (1) darstellt.

6. Schweißpistole gemäß Anspruch 1, dadurch gekennzeichnet, daß die Achsen der Scharniere (12, 14), welche die Schwinghebel (5, 8) mit dem Rahmen (13) verbinden, derart angeordnet sind, daß an dem Schnittpunkt (34) die obere Elektrode (1) eine im wesentlichen vertikale Geschwindigkeit darstellt, und die Bahn der unteren Elektrode (7) im wesentlichen unter einer horizontalen Ebene durch den Schnittpunkt (34) liegt.

7. Schweißpistole nach einem der vorhergehenden Ansprüche, dadurch gekennzeichnet, daß die Position der Scharniere (12, 14) welche die Schwinghebel (5, 8) mit dem Rahmen (13) verbinden, der Abstand zwischen der unteren und oberen Elektrode (1, 7) und die Achsen der Scharniere (12, 14), die den ersten beziehungsweise zweiten Schwinghebel (5, 8) verbinden, und die Länge der Verbindungsstange (17) derart ausgewählt sind, daß über den Endbereichen des ersten und zweiten Bogens (32, 33) vor dem Schnittpunkt (34) die vertikale Geschwindigkeitskomponente der oberen Elektrode (1) im wesentlichen konstant ist, und die vertikale Geschwindigkeitskomponente der unteren Elektrode (7) allmählig gegen Null geht, wenn die untere Elektrode (7) die Arbeitsstellung erreicht.

8. Schweißpistole gemäß Anspruch 7, dadurch gekennzeichnet, daß der Abstand zwischen der oberen Elektrode (1) und dem Scharnier (12), welches den ersten Schwinghebel (5) verbindet, im wesentlichen gleich dem Abstand zwischen der unteren Elektrode (7) und dem Scharnier (14), welches den zweiten Schwinghebel (8) verbindet, und im wesentlichen gleich dem Abstand zwischen den Scharnieren (12, 14) ist; wobei die Länge der Verbindungsstange (17) mehr als 1/3 und weniger als 1/5 des Abstands zwischen den Elektroden (1, 7) und den Scharnieren (12, 14) beträgt.

9. Schweißpistole nach einem der vorhergehenden Ansprüche, dadurch gekennzeichnet, daß der Rahmen (13) der Pistole einen im wesentlichen vertikalen Hebel umfaßt, mit dessen Ende das Gehäuse (23) des Fluidzylinders (22) gelenkig verbunden ist.

## Revendications

1. Pistolet à souder comprenant une électrode supérieure (1) et une électrode inférieure (7) mobiles entre une position de repos et une position de travail en contact avec la pièce (3), caractérisé en ce que ladite électrode supérieure (1) est raccordée à un premier bras basculant (5) d'un quadrilatère articulé (6) de façon à se déplacer selon un premier arc (32) ; et en ce que ladite électrode inférieure (7) est raccordée à un deuxième bras basculant (8) dudit quadrilatère articulé (6) de façon à se déplacer selon un deuxième arc (33), chacun desdits bras basculants (5, 8) ayant une extrémité raccordée par une articulation (12, 14) au cadre (13) dudit pistolet, et étant raccordé par une articulation (15, 16) à une bielle de liaison (17) entre lesdits bras basculants (5, 8), un moyen d'actionnement (18) étant procuré pour commander l'un desdits bras basculants (5, 8) de façon à déplacer lesdites électrodes (1, 7) de ladite première position et ladite deuxième position, ladite deuxième position étant choisie de façon à être disposée pratiquement au point d'intersection (34) desdits premier et deuxième arcs (32, 33).

2. Pistolet à souder selon la revendication 1, caractérisé en ce que ledit moyen d'actionnement (18) comprend un vérin à fluide (22) ayant un cylindre (23) et une tige (24) actionnés par un piston coulissant à l'intérieur dudit cylindre (23), ledit cylindre (23) et ladite tige (24) étant articulés respectivement audit cadre (13) et à un bras (25) d'un seul tenant avec ledit premier bras basculant (5).

3. Pistolet à souder selon la revendication 1 ou la revendication 2, caractérisé en ce que ladite électrode supérieure (1) est raccordée audit bras (5) d'un seul tenant avec ledit premier bras basculant (5).

4. Pistolet à souder selon l'une des revendications précédentes, caractérisé en ce que ladite électrode inférieure (7) est raccordée à un bras (28) d'un seul tenant avec ledit deuxième bras basculant (8).

5. Pistolet à souder selon l'une des revendications précédentes, caractérisé en ce que les axes desdites articulations (12, 14) raccordant lesdits bras basculants (5, 8) audit cadre (13) sont disposés de telle sorte que, audit point d'intersection (34), les tangentes auxdits arcs (32, 33) forment un angle supérieur à 90°, et ladite électrode inférieure (7) présente une composante de vitesse dans la direction opposée à celle de ladite électrode supérieure (1).

6. Pistolet à souder selon la revendication 1, caractérisé en ce que lesdits axes desdites articulations (12, 14) raccordant lesdits bras basculants (5, 8) audit cadre (13) sont disposés de telle sorte que, audit point d'intersection (34), ladite électrode supérieure (1) présente une vitesse pratiquement verticale et que le trajet de ladite électrode inférieure (7) se trouve pratiquement en dessous d'un plan horizontal passant par ledit point d'intersection (34).

7. Pistolet à souder selon l'une des revendications précédentes, caractérisé en ce que la position desdites articulations (12, 14) raccordant lesdits bras basculants (5, 8) audit cadre (13), la distance entre lesdites électrodes supérieure et inférieure (1, 7) et lesdits axes desdites articulations (12, 14) raccordant respectivement lesdits premier et deuxième bras basculants (5, 8), et la longueur de ladite bielle de liaison (17) sont choisies de telle sorte que, sur les portions finales desdits premier et deuxième arcs (32, 33) avant ledit point d'intersection (34), la composante de vitesse verticale de l'électrode supérieure (1) est pratiquement constante, et la composante de vitesse verticale de l'électrode inférieure (7) diminue progressivement jusqu'à pratiquement zéro au moment où ladite électrode inférieure (7) atteint ladite position de travail.

8. Pistolet à souder selon la revendication 7, caractérisé en ce que ladite distance entre ladite électrode supérieure (1) et ladite articulation (12) raccordant ledit premier bras basculant (5) est pratiquement égale à la distance entre ladite électrode inférieure (7) et ladite articulation (14) raccordant ledit deuxième bras basculant (8) et pratiquement égale à la distance entre lesdites articulations (12, 14), la longueur de ladite bielle de liaison (17) étant supérieure à un tiers et inférieure à un cinquième de ladite distance entre lesdites électrodes (1, 7) et lesdites articulations (12, 14).

9. Pistolet à souder selon l'une des revendications précédentes, caractérisé en ce que ledit cadre (13) dudit pistolet comprend un bras pratiquement vertical à l'extrémité duquel est articulé ledit cylindre (23) dudit vérin à fluide (22).
